# FASCICULE DE BREVET EUROPEEN

(11) **EP 0 387 132 B1**
(45) Date de publication et mention de la délivrance du brevet: **15.09.1993**
(21) Numéro de dépôt: 90400580.8
(22) Date de dépôt: 02.03.1990
(51) Int. Cl.: B64D 37/32, F16L 55/10, B60K 15/01

(54) **Dispositif de connexion auto-obturant entre contenants**
Selbstverschliessende Verbindungsvorrichtung zwischen Behältern
Self-closing connection device between containers

(30) Priorité: 03.03.1989 FR 8902947
(43) Date de publication de la demande: 12.09.1990
(73) Titulaire: AERAZUR, F-92137 Issy les Moulineaux (FR)
(72) Inventeur: Bac, Jean-Claude, F-76650 Le Petit Couronne (FR)
(74) Mandataire: Hud, Robert

(56) Documents cités:
- DE-A- 3 122 000
- FR-A- 2 075 893
- FR-A- 2 456 277

## Description

L'invention se rapporte aux contenants, tels que réservoirs, citernes ou canalisations reliés entre eux par une connexion souple. Elle se présente comme une sécurité en cas de chocs sur un véhicule ou un aeronef sur lesquels les réservoirs de carburant sont munis de dispositifs de sécurité dits anti-crash et peut également être utilisée sur tout contenant souple ou rigide de liquide dangereux pour l'environnement.

Dans un réservoir rigide, les canalisations d'alimentation, et souvent aussi celles d'évacuation, formant, par exemple, un réseau de distribution, doivent présenter une zone déformable acceptant rotations et débattements, constituée d'un organe dit joint de dilatation. Les débattements sont limités par les performances géométriques de ce joint qui s'avère bien souvent être la zone de rupture en cas d'accident. Le brevet français n° 1.444.034 de Calorstat prévoit des replis de métal entre viroles concentriques raccordant deux éléments rigides qui acceptent ainsi des variations angulaires.

Dans un dispositif rigide comme cette première famille de contenants, il existe des valves de sécurité du type décrit dans la revue LAPIS de février 1965, où un clapet vient obturer l'orifice rigide de raccordement dès que le tuyau de liaison est arraché. Cette technique exige que toutes dispositions mécaniques et géométriques soient prises afin que la séparation ait toujours lieu par traction à peu près axiale sur la canalisation de liaison, ce qui n'est pas toujours réalisable.

Par le document DE-A-3122000 on connait un dispositif de liaison entre deux canalisations de transport de gaz ou d'eau. Ce dispositif de liaison comprend un élément extérieur solidaire de l'une des canalisations à l'intérieur duquel est engagée l'extrémité de l'autre canalisation. A son extrémité l'élément extérieur comprend un embout qui maintient un joint d'étanchéité en application contre la paroi du tube intérieur. Celui-ci se termine, à l'intérieur de l'élément de liaison, par un obturateur présentant une paroi tronconique dotée d'anneaux d'étanchéité. En avant de cet obturateur le tube intérieur présente des ouvertures latérales débouchant dans l'élément extérieur. En cas d'arrachement, la paroi conique de l'obturateur et les joints qui lui sont associés engagent une paroi conique interne de l'élément extérieur en interrompant toute circulation de fluide entre les deux canalisations.

Au contraire, les canalisations très souples peuvent être reliées avec sécurité aux contenants par une manchette souple telle celle décrite dans le brevet US 1 923 124 de Stanley pour canalisations de vide, à condition que les liaisons mécaniques de sécurité soient assurées par ailleurs. De même, dans cette famille de contenants, liés de façon souple à une canalisation, le brevet français 2 456 277 de Kléber Colombes décrit une communication de ce type, caractérisée par un repli de matériaux souples tourné vers l'intérieur du réservoir. La sécurité des réservoirs de carburant pour voitures de course ainsi que pour hélicoptères est nettement accrue par la possibilité d'une course géométrique entre les réservoirs ainsi reliés.

Dans la mesure où les moyens de fixation à la structure rigide sont équipés de dispositifs amortisseurs dit anti-crash, connus par ailleurs, et que les parois souples sont aptes à subir des déformations élevées, la sécurité est repoussée jusqu'au stade où se produit l'arrachement entre la canalisation et le réservoir. De tels réservoirs anti-crash sont définis par une paroi souple confinée contre des cloisons rigides solidaires de la structure, cloisons que traverse la canalisation souple ou rigide.

La présente invention vient en complément de ces dispositifs et a pour objectif d'imposer la succession, dans un ordre impératif, des divers évènements :
- d'abord, une déformation dont la valeur mesure la gravité de l'accident,
- puis, l'obturation déclenchée par un critère de course géométrique au moyen d'un dispositif original,
- enfin, la rupture de la liaison, garantie n'intervenir automatiquement qu'après l'obturation de la connexion des deux côtés de la séparation.

Le dispositif permettant cette procédure s'applique sur les contenants munis d'une manchette souple comportant un repli interne en matériau souple. Tout effort sur ladite manchette se transforme, du fait des courses importantes permises, en une traction dans l'alignement des orifices des contenants, ce qui offre, par exemple, à deux réservoirs de sécurité interconnectés, séparés par une cloison rigide, faisant partie de la structure, une beaucoup plus grande sécurité en cas d'accident.

Selon l'invention le dispositif de connexion auto-obturant est du type agissant entre des contenants dont l'un au-moins présente une paroi souple appuyée contre une cloison rigide percée d'un alésage ou contre une cloison mince percée d'une ouverture, la paroi souple dudit contenant se trouvant dans une position interne à la cloison rigide ou à la cloison mince par rapport au volume délimité par le contenant, et une manchette de liaison étant montée sur ledit contenant à paroi souple au moyen d'un repli de cette manchette, interne au-dit contenant et réalisé en matériau souple, qui se poursuit par un fût cylindrique traversant ledit alésage ou ouverture , et il se caractérise en ce qu'un tronçon de tube est lié audit fût cylindrique et présente des orifices mettant en liaison ledit contenant et la manchette, alors qu'un élément d'obturation est solidaire de l'extrémité du tronçon de tube située vers l'intérieur du contenant, de façon qu'une traction exercée par le fût cylindrique et tendant à écarter les contenants provoque un retournement du repli par dessus les orifices du tronçon de tube, et l'obturation de ladite connexion par l'engagement dudit élément d'obturation à travers ledit alésage ou ladite ouverture.

L'invention et ses variantes seront mieux comprises à la lecture de la description accompagnant les dessins, dans lesquels :
- la figure 1 illustre l'application de l'invention, à titre d'exemple, à la connexion de réservoirs sur un hélicoptère ;
- la figure 2 représente, en coupe par l'axe, le dispositif de connexion auto-obturant, muni d'un clapet rigide, en position de service ;
- la figure 3 illustre la position du même dispositif, en cours d'obturation, avant la séparation des "éléments fusibles" ;
- la figure 4 montre le même dispositif lors de la séparation des deux contenants protégés ;
- la figure 5 représente, également en coupe axiale, un dispositif de connexion auto-obturant à obturateur souple, en position de service ;
- la figure 6 décrit la position du même dispositif en cours d'obturation par une rondelle rigide associée.
- la figure 7 montre ce même dispositif lors de la séparation des contenants protégés.

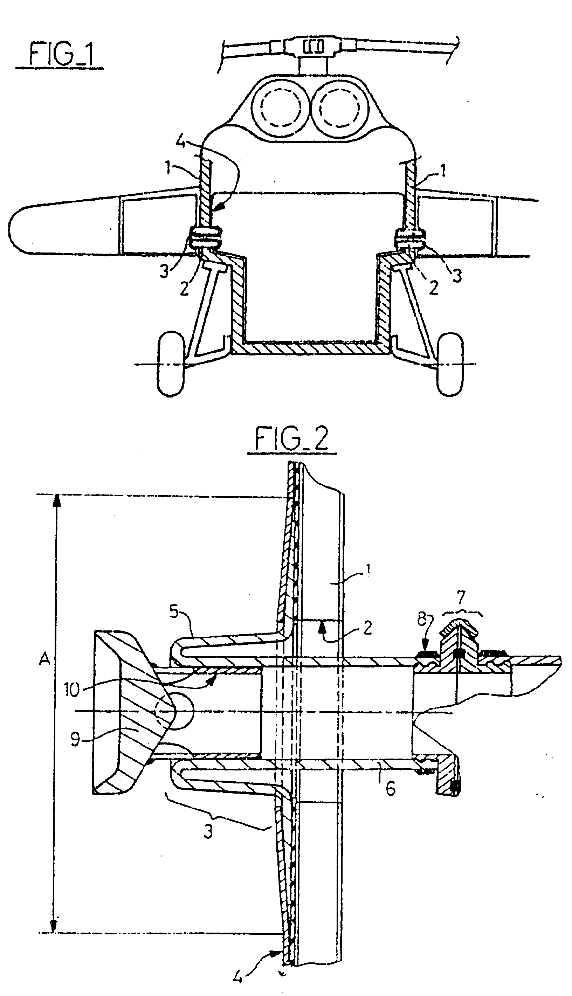

La figure 1 illustre l'application de l'invention, par exemple à un hélicoptère dont les cloisons rigides (1) contiennent un réservoir principal à parois souples prenant la forme du volume intérieur où il est confiné, par appui sur lesdites cloisons rigides. Elles sont traversées, au moyen d'alésage (2) par des manchettes de liaison (3) permettant la communication, à forte section, avec des réservoirs complémentaires contenus dans des ailerons latéraux. Lesdits réservoirs complémentaires apportent une contenance supplémentaire en liaison permanente, au remplissage comme à l'utilisation. Cependant, en cas d'accident tel qu'un choc ou une chute libre, la traversée d'une paroi rigide (1) par les manchettes de liaison (3) représente une circonstance agravante qui limite les performances du réservoir en raison des risques de rupture. Pour qu'un tel choc, par ailleurs insuffisamment violent pour mettre en péril la vie des occupants, ne provoque pas l'embrasement subit de l'appareil, il ne faut pas que se rompe le dispositif mettant les deux réservoirs en communication, même si ces derniers se déplacent ou si une partie métallique est projetée sur ledit dispositif. Le dispositif de connexion auto-obturant rend donc possible la liaison permanente entre plusieurs réservoirs séparés par des parois rigides tout en assurant une totale sécurité.

La figure 2 est une coupe partielle, en position de service, de l' exemple particulier d'application de l'invention, aux réservoirs de carburant sur un hélicoptère. Cette coupe est faite par l'axe d'une tubulure de liaison qui, le plus couramment, fait communiquer à forte section deux éléments de réservoir souple séparés par une cloison rigide (1) faisant partie de la structure de l'appareil.

Constituée d'un matériau en nid d'abeille, d'épaisseur notable, compris entre deux peaux métalliques, cette paroi rigide laisse passer, avec plusieurs centimètres de jeu possible, par un alésage (2), la manchette de liaison (3) qui sort du réservoir à parois souples (4) et traverse une ou plusieurs autres cloisons.

Ladite manchette (3), connue de l'art antérieur, comporte un repli (5) situé à l'intérieur du réservoir. Elle est généralement constituée de cablés de textile enduits de caoutchouc synthétique, de tenue compatible avec le carburant contenu dans le réservoir. Un pli de cablés présente une direction parallèle aux génératrices dans le fût cylindrique (6) de la manchette et vient s'épanouir lors de la confection de celle-ci sur le plan de collage aux parois souples (4) suivant une grande surface de collage de diamètre (A). Dans le fût cylindrique (6) aussi bien que dans la partie cylindrique du repli (5), des cablés circonférentiels viennent renforcer la manchette de liaison (3) dans son épaisseur sensiblement constante qui se termine progressivement en biseau au bord de l'alésage (A).

Le réservoir à parois souples (4) est en appui par toutes ses faces sur des parois faisant partie de la structure comme la cloison rigide (1) et, en cas de choc brutal, peut glisser dans une certaine mesure sur ces parois, grâce à l'amortissement procuré par les dispositifs anti-crash.

Le fût cylindrique (6) de la manchette de liaison (3) est relié soit à une canalisation, soit, comme représenté, à un réservoir analogue, situé de l'autre côté de la cloison rigide (1), par un raccord rigide (7) permettant un assemblage mécanique étanche.

La manchette de liaison (3) est fixée audit raccord rigide (7), par exemple par un collier de serrage (8), de façon que l'ensemble préparé sur le réservoir puisse passer à travers l'alésage (2) dans la cloison.

Le dispositif d'auto-obturation de la connexion, selon l'invention, est constitué d'un clapet rigide (9), par exemple métallique, en aluminium ou en alliage léger et est rendu solidaire d'un tronçon de tube (10), par soudure ou par moulage.

Ledit tronçon de tube (10), percé de trous par où circule librement le carburant, est emmanché à force et positionné dans le fût cylindrique (6) de la manchette de liaison (3) où il est fixé par un moyen mécanique approprié ou par collage.

De petits mouvements élastiques sont possibles pour ladite manchette de liaison par le roulement sur lui-même du repli (5).

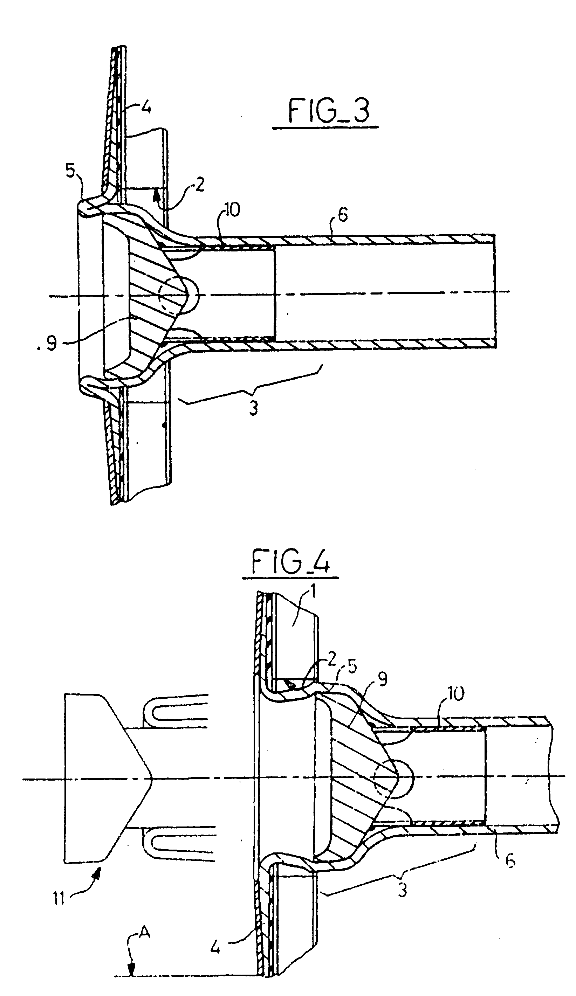

La figure 3 représente la phase d'obturation automatique du dispositif, dès lors que la course de traction a dépassé une certaine valeur. Jusqu'alors réversible, la traction sur la manchette de liaison (3) provoquée par l'écartement, quelle que soit sa direction, des deux réservoirs reliés par l'intermédiaire du fût cylindrique (6) provoque le recouvrement des ouvertures situées sur le tronçon de tube (10). Au-delà de ce stade, le repli (5), encore situé à l'intérieur du réservoir, se retrouve engagé par dessus le clapet rigide (9) en roulant sur lui-même, grâce à la tension de la structure cablée parallèle aux génératrices dudit fût cylindrique (6). L'obturation est alors totale et rendue irréversible (sauf manoeuvre de récupération) du fait de l'élasticité des cablés de renfort disposés circonférentiellement sur le repli (5) qui rendent possible une pression locale de plusieurs bars pour assurer l'étanchéité au liquide. Cet engagement de la manchette de liaison (3), chaussant le tronçon de tube (10) reste possible, même sous l'effet d'une traction oblique exercés par l'intermédiaire des cablés qui suivent les génératrices du fût cylindrique (6).

L'obturation obtenue, le mouvement de traction, même oblique, peut encore se poursuivre jusqu'à la position représentée par la figure 3, à moins qu'un appui oblique du clapet rigide (9), à travers la paroi de la manchette de liaison (3) sur l'alésage (2) de la cloison, n'ait déjà exercé une réaction suffisante pour provoquer la rupture des "éléments fusibles", constitués, par exemple, par l'emmanchement à force du fût cylindrique (6) sur le raccord rigide.

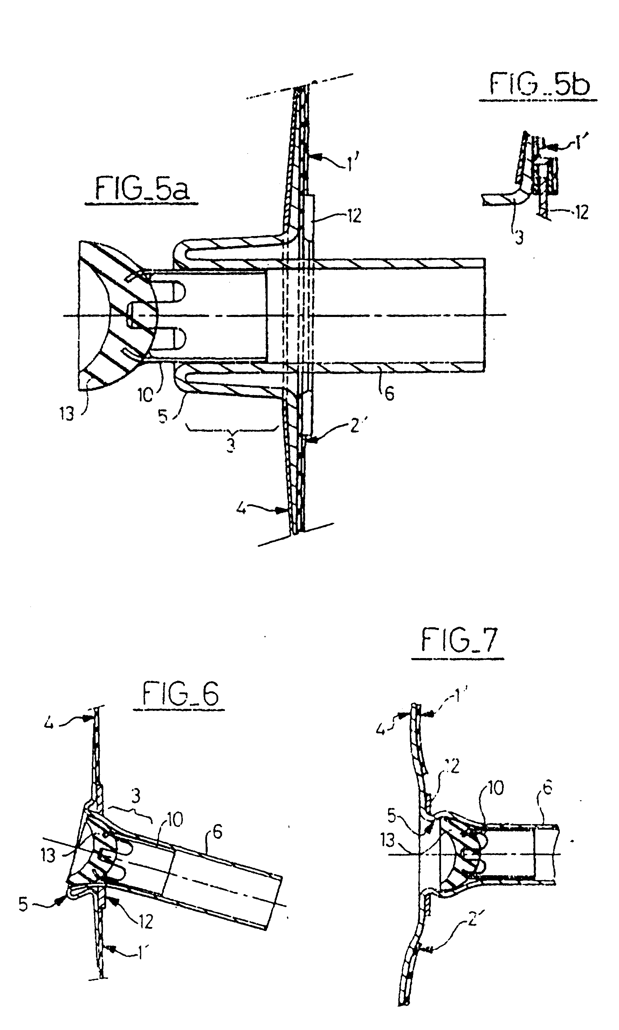

La figure 4 représente la phase de l'obturation complète de la connexion au moment de la séparation accidentelle entre deux réservoirs reliés par la manchette de liaison (3) après le franchissement par la surépaisseur due au clapet rigide (9), entouré du repli (5) complètement retourné, de l'alésage (2) à travers la cloison rigide (1). Tous les cablés suivant les génératrices se trouvent tendus et ancrés jusqu'au diamètre (A) par leur collage sur la paroi souple (4).

Dans ce cas extrême, tous les cablés axiaux participent à la traction sur une périphérie très supérieure à celle du fût cylindrique (6), où la rupture est appelée à se produire en premier. Soit par interruption volontaire des cablés de renfort suivant les génératrices, soit par un dispositif à friction mécanique controlée ménagé dans le raccord rigide (7), la rupture est obtenue sur le fût cylindrique (6) ou dans son prolongement immédiat.

La faible quantité de liquide dangereux ou de carburant contenue entre les deux clapets de sécurité ainsi constitués peut s'écouler et éventuellement être arrêtée par un dispositif spongieux de volume limité. Au-delà de la rupture, les deux éléments de réservoir peuvent être écartés sans limite, du moment que l'intégrité de leurs parois est maintenue par des éléments amortissants appropriés.

La course disponible jusqu'à rupture, de l'ordre du décimètre, se déduit de la position en service (11), schématisée en traits fins, par rapport à la position obturée par le clapet rigide (9).

La figure 5 représente une coupe axiale d'une variante du dispositif de connexion auto-obturant, à obturateur souple, en position de service.

Dans la vue 5a, à la paroi, constituée d'une cloison mince (1') dans cette application, est accolée, pour garantir l'effet du dispositif, une rondelle associée (12), elle-même collée à la paroi souple (4) du contenant. Dans la vue 5b, est montrée une disposition flottante de ladite rondelle associée (12), admettant un jeu radial. Dans les deux cas, ladite rondelle associée (12) vient donc en fourniture avec le contenant souple et se plaque au montage dans l'ouverture (2') de la cloison mince (1').

Le dispositif auto-obturant est constitué d'un obturateur souple (13) en élastomère synthétique compatible avec le liquide du contenant, adhérisé lors de sa vulcanisation au tronçon de tube (10). Ce dernier est percé de trous de circulation du liquide et emmanché à force dans le fût cylindrique (6) de la manchette de liaison (3) où il peut être fixé comme dans la variante précédente. Plus léger que le dispositif précédent, l'obturateur souple (13) constitue, avec ledit tronçon de tube (10) un solide de masse réduite dont l'accélération lors d'un choc exerce moins de déformation sur la manchette de liaison (3).

La figure 6 représente le début d'obturation sous l'effet d'une traction oblique reçue par le fût cylindrique (6), relié par un raccord non représenté à une autre manchette de liaison analogue.

Par un début de déformation réversible, le repli (5) de la manchette de liaison (3) vient recouvrir d'abord les trous de circulation du liquide ménagés dans le tronçon de tube (10), puis s'engage par dessus l'obturateur souple (13) de forme extérieure sensiblement hémisphérique. Même dissymétrique, le retournement du repli (5), encore disposé à l'intérieur du réservoir, vient donc chausser l'obturateur souple (13) avant même qu'il ne se présente dans l'alésage de la rondelle associée (12).

Si elle est arrêtée à ce stade, la manoeuvre d'obturation est encore réversible par une opération manuelle de récupération du fait de la souplesse du repli (5) qui a encore peu déformé l'obturateur souple (13).

La figure 7 est une coupe axiale illustrant le dernier stade da la variante à clapet déformable tel que l'obturateur souple (13) et rondelle associée (12) au moment de la séparation des contenants, permise soit par rupture ménagée des cablés dans le fût cylindrique (6), soit par friction contrôlée dans le raccord rigide de liaison.

Même si la cloison mince (1'), par sa déformabilité, exerce trop peu d'accélération, dans un accident, pour contrôler la manoeuvre automatique d'obturation, l'écartement des contenants force l'alésage de la rondelle associée (12), collée à la paroi souple (4), à passer par dessus l'obturateur souple (13), exerçant cet effort à travers une seule épaisseur de la manchette de liaison (3), qui chausse déjà ledit obturateur souple (13).

En effet, le repli (5) n'est conduit à se retourner totalement, comme représenté, qu'après le passage forcé de l'obturateur souple (13) à travers la rondelle associée (12). L'élasticité ménagée par les cablés de renfort qui constituent ledit repli (5) permet la striction représentée, sur un diamètre plus réduit que celui de l'obturateur souple (13) ce qui assure la pression nécessaire à l'étanchéité.

Antérieurement à la position représentée, l'indéformabilité diamétrale de la rondelle associée (12), dont l'alésage est sensiblement voisin du diamètre extérieur de l'obturateur souple (13), a obligé ce dernier à se contracter diamètralement d'environ deux fois l'épaisseur de la manchette de liaison (3).

La réaction importante exercée provoque, de ce fait, la séparation des contenants. Cet effort est transmis par les cablés longitudinaux de renfort dans le fût cylindrique (6), eux-mêmes ancrés par une grande surface de collage sur la paroi souple (4) du contenant, même si la cloison mince (1') a exercé une réaction insuffisante et s'est déformée comme représenté. La connexion dispose ainsi d'une sécurité permettant le verrouillage de l'obturation dans le cas où la résistance insuffisante de la cloison mince (1') laisserait s'engager la paroi souple (4) dans son ouverture (2'), avec trop faible réaction et risques de déchirures de ladite paroi souple (4), au-delà de la zone obturée.

Une telle situation se présenterait si, sous l'effet de la traction, le réservoir souple avait tendance à se plisser et à passer par l'ouverture (2'). Celle-ci, alors déchirée, deviendrait agressive pour la paroi souple (4).

La rondelle associée (12) permet donc une rupture franche de la connexion par une zone "fusible" qui ne se rompt qu'après l'opération d'obturation.

Le dispositif auto-obturant associé à une manchette souple à repli interne au contenant forme, avec ce contenant, un ensemble monobloc. Il ne modifie pas le processus de mise en place d'un contenant souple dans les espaces libres peu accessibles d'une structure de véhicule ou d'aéronef. La souplesse de la manchette et la partie réversible de l'opération d'obturation autorisent l'assemblage de manchettes par des procédés classiques de colliers ou de raccords à assemblage mécanique.

Par ailleurs, le rechange d'un contenant élémentaire n'est pas modifié par la présence du dispositif auto-obturant.

Outre l'évidente sécurité apportée par la succession, dans l'ordre impératif, des étapes de déformation, d'obturation et de rupture de la connexion, limitant les risques à l'écoulement d'une très faible quantité de liquide, lors d'un choc important, le dispositif de connexion auto-obturant, objet de l'invention présente les avantages suivants :
- il garantit la souplesse de la connexion entre deux contenants puisqu'il ne comporte pas de pièce rigide pour assurer ladite connexion ;
- il assure un allègement du montage en limitant le nombre de pièces métalliques, donc lourdes ;
- il permet un élargissement des tolérances des ouvertures et des positionnements ;
- il facilite la mise en place des ensembles de contenants, grâce à sa souplesse ;
- il reporte à un niveau plus élevé la sécurité intrinsèque demandée aux réservoirs de sécurité.

L'homme de l'art pourra, bien entendu, apporter au dispositif de connexion auto-obturant, objet de l'invention, différentes modifications et, en particulier, combiner les diverses variantes préférées en formes et en dimensions, sans sortir du cadre de l'invention.

## Revendications

1. Dispositif de connexion auto-obturant entre des contenants dont l'un au-moins présente une paroi souple (4) appuyée contre une cloison rigide (1) percée d'un alésage (2) ou contre une cloison mince (1') percée d'une ouverture (2'), la paroi souple (4) dudit contenant se trouvant dans une position interne à la cloison rigide (1) ou à la cloison mince (1') par rapport au volume délimité par le contenant, et une manchette de liaison (3) étant montée sur ledit contenant à paroi souple (4) au moyen d'un repli (5) de cette manchette (3), interne au-dit contenant et réalisé en matériau souple, qui se poursuit par un fût cylindrique (6) traversant ledit alésage (2) ou ouvertures (2'), caractérisé en ce qu'un tronçon de tube (10) est lié audit fût cylindrique (6) et présente des orifices mettant en liaison ledit contenant et la manchette (3), alors qu'un élément d'obturation (9) est solidaire de l'extrémité du tronçon de tube (10) située vers l'intérieur du contenant, de façon qu'une traction exercée par le fût cylindrique (6) et tendant à écarter les contenants provoque un retournement du repli (5) par dessus les orifices du tronçon de tube (10), et l'obturation de ladite connexion par l'engagement dudit élément d'obturation (9) à travers ledit alésage (2) ou ladite ouverture (2').

2. Dispositif de connexion auto-obturant entre contenants selon la revendication 1, caractérisé en ce que l'élément d'obturation après retournement du repli (5) est constitué d'un clapet rigide (9) qui, sous l'effet de la traction accidentelle, passe en force, chaussé de la manchette de liaison (3), à travers l'alésage (2) de la cloison rigide (1), avant rupture du fût cylindrique (6) ou de son prolongement immédiat.

3. Dispositif de connexion auto-obturant entre contenants selon la revendication 1, caractérisé en ce que l'élément d'obturation après retournement du repli (5) est constitué d'un obturateur souple (13) qui, sous l'effet de la traction accidentelle, passe en force, chaussé de la manchette de liaison (3) à travers une rondelle associée (12), collée à la paroi souple (4), en simple appui sur l'ouverture (2') de la cloison mince (1'), avant rupture du fût cylindrique (6) ou de son prolongement immédiat.

4. Ensemble de deux réservoirs à paroi souple (4), reliés souplement l'un à l'autre par une manchette de liaison (3), raccordée à une manchette analogue par un raccord rigide (7), caractérisé en ce que chaque manchette de liaison (3) est équipée d'un dispositif de connexion auto-obturant conforme à l'une des revendications 1 à 3.

5. Ensemble d'un contenant à paroi souple (4) et d'une canalisation qui lui est reliée souplement par une manchette de liaison (3), au moyen d'un raccord rigide (7), caractérisé en ce que ladite manchette de liaison (3) est équipée d'un dispositif de connexion auto-obturant conforme à l'une des revendications 1 à 3.

## Patentansprüche

1. Selbstverschließende Verbindungsvorrichtung zwischen Behältern, von denen mindestens einer eine elastische Wand (4) aufweist, die sich gegen eine starre Trennwand (1) mit einer Bohrung (2) oder eine dünne Trennwand (1') mit einer Öffnung (2') stützt, wobei die elastische Wand (4) des genannten Behälters sich in einer Innenlage zur starren Trennwand (1) oder zur dünnen Trennwand (1') in bezug auf das durch den Behälter abgegrenzte Volumen befindet und eine Verbindungsmanschette (3) am Behälter mit elastischer Wand (4) mittels eines Falzes (5) dieser Manschette (3) aus elastischem Werkstoff im Innern dieses Behälters befestigt ist und sich durch eine zylindrische Anschlußhülse (6) fortsetzt, die durch die genannte Bohrung (2) oder Öffnung (2') hindurchgeht, dadurch gekennzeichnet, daß ein Rohrstück (10) mit der zylindrischen Anschlußhülse (6) verbunden ist und Öffnungen aufweist, die den genannten Behälter und die Manschette (3) in Verbindung bringen, während ein Verschlußelement (9) mit dem in Richtung Behälterinnern gelegenen Rohrstück (10) fest verbunden ist, so daß eine durch die zylindrische Anschlußhülse (6) ausgeübte und die Behälter voneinander zu entfernen trachtende Zugkraft ein Kippen des Falzes (5) über die Öffnungen des Rohrstücks (10) und das Verschließen der genannten Verbindung durch den Eingriff des Verschlußelements (9) durch die Bohrung (2) oder Öffnung (2') bewirkt.

2. Selbstverschließende Verbindungsvorrichtung zwischen Behältern nach Anspruch 1, dadurch gekennzeichnet, daß das Verschlußelement (9) nach Kippen des Falzes (5) aus einer starren Klappe (9) besteht, die unter der Wirkung der zufälligen Zugkraft, der Verbindungsmanschette (3) anliegend, durch die Bohrung (2) der starren Trennwand (1) gezwungen wird, bevor die zylindrische Anschlußhülse (6) reißt oder sich verlängert.

3. Selbstverschließende Verbindungsvorrichtung zwischen Behältern nach Anspruch 1, dadurch gekennzeichnet, daß das Verschlußelement (9) nach Kippen des Falzes (5) aus einem elastischen Verschluß (13) besteht, der unter der Wirkung der zufälligen Zugkraft, der Verbindungsmanschette (3) anliegend, durch eine zugeordnete Scheibe (12), in einfacher Abstützung auf die Öffnung (2) der dünnen Trennwand (1) geklebt, gezwungen wird, bevor die zylindrische Anschlußhülse (6) reißt oder sich verlängert.

4. Zusammenbau aus zwei Behältern mit elastischer Wand (4), die miteinander elastisch über eine Verbindungsmanschette (3), angeschlossen an eine gleiche Manschette über einen starren Anschluß (7), verbunden sind, dadurch gekennzeichnet, daß jede Verbindungsmanschette (3) mit einer selbstverschließenden Verbindungsvorrichtung nach einem der Ansprüche 1 bis 3 ausgerüstet ist.

5. Zusammenbau aus einem Behälter mit elastischer Wand (4) und einer Leitung, die mit ihm elastisch durch eine Verbindungsmanschette (3) mittels eines starren Anschlusses (7) verbunden ist, dadurch gekennzeichnet, daß die Anschlußmanschette (3) mit einer selbstverschließenden Verbindungsvorrichtung nach einem der Ansprüche 1 bis 3 ausgerüstet ist.

## Claims

1. Self-closing connector device between containers whereof at least one has a flexible wall (4) pressed against a rigid partition (1) pierced by a bore (2) or against a thin partition (1') pierced by an aperture (2'), the flexible wall (4) of the said container being located in an internal position in the rigid partition (1) or the thin partition (1') with respect to the volume delimited by the container, and a connecting sleeve (3) being mounted on the said container with a flexible wall (4) by means of a turned-in portion (5) of this sleeve (3), inside the said container and made of flexible material, which is extended by a cylindrical barrel (6) passing through the said bore (2) or apertures (2'), characterised in that a length of tube (10) is connected to the said cylindrical barrel (6) and has openings which connect the said container and the sleeve (3), whilst a closure element (9) is integral with the end of the length of tube (10) situated towards the interior of the container, in such a way that traction exerted by the cylindrical barrel (6) and tending to pull the containers apart causes the return of the turned-in portion (5) above the openings in the length of tube (10) and the closure of the said connection by the engagement of the said closure element (9) through the said bore (2) or the said aperture (2').

2. Self-closing connector device between containers as claimed in Claim 1, characterised in that after the return of the turned-in element (5) the closure element consists of a rigid valve (9) which under the effect of accidental traction and encased by the connecting sleeve (3) passes forcefully through the bore (2) in the rigid partition (1) before rupture of the cylindrical barrel (6) or of its immediate extension.

3. Self-closing connector device between containers as claimed in Claim 1, characterised in that the closure element after return of the turned-in element (5) comprises a flexible closure (13) which under the effect of accidental traction and encased by the connecting sleeve (3) passes forcefully through an associated disc (12) glued to the flexible wall (4) to press simply on the aperture (2) of the thin partition (1') before rupture of the cylindrical barrel (6) or of its immediate extension.

4. Assembly of two tanks with a flexible wall (4), flexibly joined to each other by a connecting sleeve (3) joined to a similar sleeve by a rigid connector (7), characterised in that each connecting sleeve (3) is provided with a self-closing connector device as claimed in one of Claims 1 to 3.

5. Assembly of a container with a flexible wall (4) and of a conduit flexibly connected thereto by a connecting sleeve (3), by means of a rigid connector (7), characterised in that the said connecting sleeve (3) is provided with a self-closing connector device as claimed in one of Claims 1 to 3.
